# EUROPEAN PATENT SPECIFICATION

(11) **EP 1 151 625 B1**
(45) Date of publication and mention of the grant of the patent: **13.09.2006**
(21) Application number: 00903728.4
(22) Date of filing: 09.02.2000
(51) Int. Cl.: H04Q 7/32

(54) **METHOD FOR THE UTILISATION OF APPLICATIONS STORED ON A SUBSCRIBER IDENTITY MODULE (SIM) AND FOR THE SECURE TREATMENT OF INFORMATION ASSOCIATED WITH THEM**
VERFAHREN ZUR VERWENDUNG VON IN EINEM TEILNEHMERIDENTITATSMODUL GESPEICHERTEN ANWENDUNG UND ZUR SICHERHEITSBEHANDLUNG DAMIT VERBUNDENER INFORMATION
PROCEDE D'UTILISATION D'APPLICATIONS STOCKEES SUR UN MODULE D'IDENTIFICATION D'ABONNE (SIM) ET DE TRAITEMENT PROTEGE DE DONNEES ASSOCIEES A CES APPLICATIONS

(30) Priority: 09.02.1999 FI 990256
(43) Date of publication of application: 07.11.2001
(73) Proprietor: TeliaSonera Finland Oyj, 00510 Helsinki (FI)
(72) Inventor: VATANEN, Harri, Englefield Green, Surrey TW20 0NN (GB); LIUKKONEN, Jukka, FIN-00630 Helsinki (FI); HILTUNEN, Matti, FIN-02150 Espoo (FI)
(74) Representative: Simmelvuo, Markku Kalevi
(86) International application number: PCT/FI2000/000092
(87) International publication number: WO 2000/048416

(56) References cited:
- EP-A2- 0 865 217
- WO-A1-96/25828
- WO-A1-99/01848
- WO-A1-99/39524
- US-A- 5 544 246

## Description

### FIELD OF THE INVENTION

The present invention relates to telecommunication technology. In particular, the invention concerns a new type of method and system for the utilization of applications stored on a subscriber identity module (SIM) and for secure treatment of the information associated with them using a mobile station in a telecommunication system.

### BACKGROUND OF THE INVENTION

Mobile communication networks, e.g. GSM networks (GSM, Global System for Mobile communications) enjoy a great popularity especially in Europe. Supplementary services associated with mobile communication networks are correspondingly increasing at an ever faster pace, in widely varying fields of application. The mobile telephone can be used e.g. as a means of paying for small purchases e.g. in automatic vending machines for refreshment drinks and in automatic car wash systems. Everyday functions, such as payment functions, have been and will be added to the services available via mobile stations. Next-generation mobile stations will be considerably more advanced than their predecessors in respect of service level and data transmission capacity.

Document US-A-5 544 246 only discloses a smartcard allowing different service providers to co-exist on the smartcard. The operating system of the smartcard includes a root directory that is owned by the subscriber's issuer/owner. The accessing of files that are owned by any other user is prevented.

Document WO 96 25828 A1 relates to a method for using an application in a mobile station where the applications have different mode of operations.

Document EP-A2-0 865 217 discloses a telecommunications system in which SIM cards have fixed memory locations, to which data can be addressed over the air.

Document WO 99 01848 A1 discloses a method for controlling applications stored on a SIM card. A key list comprising one or more application specific keys is stored in the SIM. A corresponding list is stored in an application server. The application stored in the SIM is activated by using the key list.

At present, most of the mobile telephones in use are devices consistent with the current mobile communication standard, the GSM standard. Present mobile stations do not support any other functions than those programmed in them by the manufacturers. In certain cases, the user interface of the telephone can be tailored, though in a very limited scope. Adding new programs and features to mobile stations consistent with the present standard would require special measures and an enormous labor input.

A problem with telephones consistent with the present mobile communication standard is that adding new properties afterwards to mobile telephones is almost impossible. To do this, it would be necessary to set the new properties separately in each mobile telephone as an after-care operation. If the updates were additionally manufacturer and device-specific, this would constitute a big problem for service providers as there is no uniform standard for this. In addition, the current mobile communication standard does not support two-way communication between the mobile station and the subscriber identity module connected to it.

A further problem is how to produce a secure and encrypted message traffic between the applications on the subscriber identity module (SIM) and service provider applications. Another problem is how to define the right of access to a given part of the subscriber identity module so that only a predetermined party may access it.

The object of the present invention is to eliminate the drawbacks referred to above or at least to significantly alleviate them. The object of the invention is to disclose a method and system that make it possible to implement the addition of new properties to telephones consistent with the present mobile communication standard by means of the subscriber identity module and to implement two-way communication between the mobile station and the subscriber identity module connected to it, by making use of e.g. SMS messages (SMS, Short Message Service) or ADN memory locations (ADN, Abbreviated Dialing Number).

However, a specific object of the invention is to disclose a method and system that make it possible to implement secure message communication with a mobile station. In the present invention, only a predetermined party and/or a predetermined partition of the subscriber identity module has a right of access to encryption and/or decryption keys placed on the subscriber identity module and/or to other information in the same space.

As for the features characteristic of the present invention, reference is made to the claims.

### SUBJECT OF THE INVENTION

The method of the present invention relates to the use of applications stored on the subscriber identity module and to secure treatment of the information associated with them. The system of the invention comprises a telecommunication network, a mobile station connected to the telecommunication network and a subscriber identity module connected to the mobile station. The telecommunication network is preferably a mobile communication network.

In the method of the invention, the mobile station is started up and a predetermined code is given in conjunction with the start-up. By means of this code, a desired operating mode of the mobile station is selected. If a special security mode is selected in conjunction with start-up, then it will be possible to encrypt and decrypt messages by means of the mobile station. In this text, instead of the expression 'security mode', the synonymous expression 'Subset mode' is used. If the same predetermined code has been assigned to several segments in the subscriber identity module, then the segment which comes first in sequential order is selected. If the code inquiry function has been deactivated in conjunction with start-up of the mobile station, then the normal mobile communication mode is used.

The subscriber identity module consists of various partitions, e.g. an operating system, different memory areas and so on. In the present invention, a distinct space in the subscriber identity module is set apart for the storage of the keys needed for the encryption and/or decryption and/or signature of messages and possible other essential information. The distinct space may only be accessed by predetermined parties, e.g. the operating system and/or its extension. In other words, applications stored on the subscriber identity module have no direct access or right of access to the distinct space, but any demand regarding utilization of the space is routed via a predetermined partition. This predetermined partition is e.g. the operating system and/or an extension of the operating system.

The utilization of the distinct space can be controlled via an OTA interface (OTA, On The Air). Via this interface, in a certain predetermined operating mode, it is possible to load new applications and/or encryption keys associated with applications onto the subscriber identity module. The OTA interface makes it considerably easier to set new applications and/or keys on the subscriber identity module. New applications can be updated by radio from an OTA server in the form of second-class eight-bit messages, in which case the message is transferred directly to the subscriber identity module. The update information is transmitted in a way unnoticed by the user of the mobile station.

The use of an OTA interface also provides an advantage in a situation where the mobile station is misused and the owner wants to prevent the use of the distinct space altogether. An application is installed in the subscriber identity module e.g. in the form of SMS modules signed and encrypted by a TTP (Trusted Third Party) for the receiver of the application. The updating of the application is only completed after all the modules associated with the application have been verified and decrypted. Even the encryption key, e.g. public key, associated with the applications comes in an encrypted form to the subscriber identity module. If an application is removed from the subscriber identity module, the associated key is removed with it.

ADN and SMS memory locations can be utilized in the operation according to the invention. On the basis of the operating mode, a functional menu can be loaded from the subscriber identity module into ADN memory locations. The desired function can then be started by saving the contents of a given ADN memory location to the mobile station.

In the Subset mode selected at start-up, the service application utilizes the information contained in a given segment of the subscriber identity module. This segment may be separate from other possible segments or it may share common areas in the file and memory space of the subscriber identity module with other segments. In the invention, the service application uses e.g. ADN memory locations for two-way communication between the mobile station and the subscriber identity module. The application or process is started e.g. when information is written to the subscriber identity module.

The applications on the SIM card are implemented using e.g. the SAPL language. A command received by the card is examined in the application concerned. If the command does not apply to the application, then it is directed to the operating system (SetCOS) of the SIM card. All commands addressed to the card are passed via a so-called Subset application, which decides whether the command is to be directed to the application in question or past it. The Subset application decides itself which commands are to be directed to it and it also decides the way in which the commands are to be handled. A Subset command forms part of e.g. an SMS message. The command is produced e.g. by changing the contents of a given ADN memory location.

The operation of the application being used may depend on the information contained in the distinct space. The procedure of loading new applications and/or keys has to be made secure by the use of a predetermined identifier. The identifier may be e.g. a PIN2 number. Likewise, to succeed in encrypting and/or decrypting a message, the user has to supply a predetermined identifier. Each application in the subscriber identity module or the service produced by each application is associated with an encryption and/or decryption key or some other unambiguous identifier.

The system of the present invention for the utilization of applications stored on a subscriber identity module in a telecommunication system comprises a telecommunication network, a mobile station connected to it and a subscriber identity module connected to the mobile station. According to the invention, the system comprises means for saving the keys required for encryption and/or signature to the subscriber identity module to a space to which access is only allowed in a given operating mode to a predetermined partition stored in the subscriber identity module.

The system comprises means which allow the utilization of the applications stored in the subscriber identity module as well as secure treatment of the information associated with them.

The invention also concerns a subscriber identity module. It comprises a data processing device, a storage device connected to the data processing device and a data transfer device connected to the data processing device. In addition, the subscriber identity module is provided with a connection interface for the transfer of information between the mobile station and the subscriber identity module.

As compared with prior art, the present invention has the advantage that it allows mobile stations consistent with the present standard to be used for secure, encrypted message communication. In other words, to utilize the functions according to the invention, it is not necessary to have a mobile station consistent with Phase 2+. Another advantage is that the mobile station can be used for controlling various applications in the subscriber identity module without updating the mobile station software at all. A further advantage is that the operating system used in the subscriber identity module may be any operating system suited for the purpose. Moreover, the invention allows easier management of the keys associated with the encryption procedures.

### LIST OF ILLUSTRATIONS

In the following, the invention will be described in detail by the aid of a few examples of its embodiments with reference to the drawings, wherein
Fig. 1 is a general representation of a preferred telecommunication system according to the invention,
Fig. 2 is diagram representing a preferred subscriber identity module according to the invention,
Fig. 3 illustrates a preferred mobile station start-up procedure according to the invention,
Fig. 4 presents a short message structure according to the invention,
Fig. 5 presents another short message structure according to the invention, and
Fig. 6 presents a preferred embodiment of the invention.

### DETAILED DESCRIPTION OF THE INVENTION

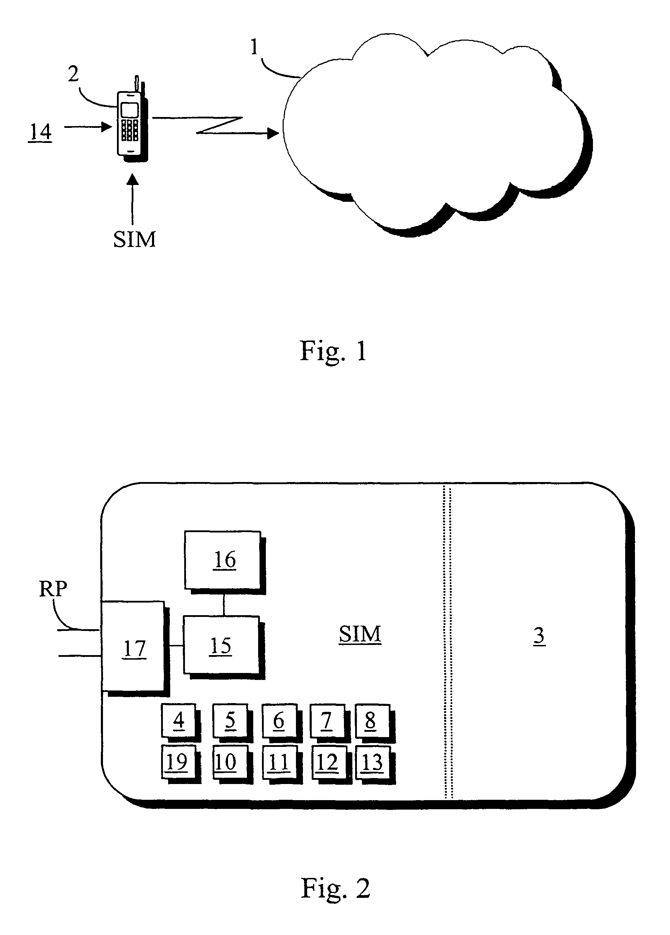

The telecommunication system illustrated in Fig. 1 comprises a telecommunication network 1. In a preferred case, the telecommunication network is a GSM network. Connected to the mobile communication network 1 is a mobile station 2, which again comprises a subscriber identity module SIM connected to it. Moreover, the mobile station 2 comprises means 14 for entering into a desired mode after a predetermined code has been fed into the subscriber identity module SIM in conjunction with start-up of the mobile station 2.

In a preferred embodiment as illustrated in Fig. 1, when the mobile station is started up, functions or commands for starting the encryption of short messages stored in the subscriber identity module are loaded into the ADN memory locations. A string functioning as a starter of encryption of short messages stored in the subscriber identity module is loaded into a memory location corresponding to a first speed dialing selection of the mobile station. When the user presses the first speed dialing key, the string stored in the corresponding ADN memory location is read and, controlled by it, the short messages stored are encrypted. The above description may correspondingly apply to the decryption of short messages received, in which case the decryption command may be stored in a different memory location.

In a preferred embodiment according to Fig. 1, functions for executing e.g. transactions like making payments to predetermined parties are loaded into the ADN memory locations in conjunction with the start-up of the mobile station. The data loaded into the ADN memory locations may consist of e.g. account numbers most often needed by the user, such as the account numbers associated with regular customer relationships with different enterprises. In this example, the user has a regular customer account in a certain shop. When the user wants to pay for purchases at the cash by means of a mobile station, he selects from the ADN memory locations of the mobile station the account to be debited and the receiver's account and enters the amount to be charged into the memory location. After this, an encrypted short message for remitting the payment corresponding to the cash bill is sent by means of the mobile station to the bank or to the shop's terminal. If the amount exceeds a predetermined limit, e.g. fifty dollars, then the user will confirm the payment with his own electronic signature.

In a preferred embodiment according to Fig. 1, a desired amount is paid to a predetermined receiver by means of a mobile station. In conjunction with start-up, the mobile station has been set into a given mode in which payments can be remitted. In this example, the amount to be remitted is 2000 dollars. The user enters the amount into a memory location and acknowledges the amount to be debited to a predetermined account. The remittance is confirmed with an electric or electronic signature by encrypting the message to be sent using the payer's secret RSA key (RSA, Rivest, Shamir, Adleman). The remittance is started by writing to a predetermined memory location a given string which activates the remittance.

The user unambiguously manifests his will by giving his PIN code. The PIN code is never transmitted with the message. The operating system performs a verification of the PIN code and removes the PIN code if it was entered correctly.

For the manifestation of the user's will, e.g. a PIN2 verification of the terminal equipment is used. In this case, after a short message has been created, reading of the short message to be signed is only allowed if PIN2 has been entered correctly. If the PIN2 code entered is incorrect, then the card will be locked up. Entering the code incorrectly e.g. three times successively will result in the subscriber identity module being locked up.

A third alternative is to give the PIN code in an ADN field.

A subscriber identity module SIM according to the invention as illustrated in Fig. 2 comprises means 4 for saving the keys required for the encryption and/or signature of the message to a space 3 in the subscriber identity module SIM to which only a predetermined partition stored in the subscriber identity module SIM has a right of access in a given operating mode.

According to the invention, the subscriber identity module SIM comprises means 5 for storing information relating to the applications to be used and/or other possible information in space 3 and means 6 for the management of space 3 and/or its contents via an OTA interface. Furthermore, the subscriber identity module comprises means 7 for controlling the operation of the application in use on the basis of the information contained in space 3 in the subscriber identity module SIM and means 8 for loading a basic menu into SMS and/or ADN memory locations and/or into some other part of the subscriber identity module SIM on the basis of the operating mode selected.

The subscriber identity module SIM additionally comprises means 9 for loading new applications and/or encryption keys associated with them into the subscriber identity module SIM via an OTA interface and means 10 for starting the loading of new applications and/or associated encryption keys only when this operation is confirmed with a predetermined identifier. New applications can be updated from an OTA server in the form of eight-bit messages, in which case the message is transmitted directly to the subscriber identity module.

The subscriber identity module SIM further comprises means 11 for attaching an encryption and/or signing key and/or some other unambiguous identifier to each application and/or to the service produced by it, means 12 for starting the encryption and/or signing of a desired message only when the operation is confirmed with a predetermined identifier, means 13 for dividing the subscriber identity module SIM into a number of separate segments and means 14 for selecting a segment in the subscriber identity module SIM using an identifier which is set in conjunction with the start-up of the mobile station 2.

Dividing the subscriber identity module into a number of separate segments makes it possible to store several applications in the module SIM. Each segment may contain a completely separate area of the file and memory space of the subscriber identity module, or the segments may share the same areas of the file and memory space.

In an embodiment of the invention, the subscriber identity module SIM comprises a filter arranged to process all information to be stored on the subscriber identity module. In an application mode, the filter processes the control commands to be transferred to the card via saving of ADN memory locations. For each application, the filter processes the commands on the basis of the contents of the memory location, producing a new command which is passed to the operating system of the subscriber identity module.

The subscriber identity module SIM preferably comprises a data processing device 15, a storage device 16 connected to the data processing device 15 and a data transfer device 17 connected to the data processing device 15. In addition, the subscriber identity module SIM is provided with a connection interface IF for data transfer between the mobile station 2 and the subscriber identity module SIM.

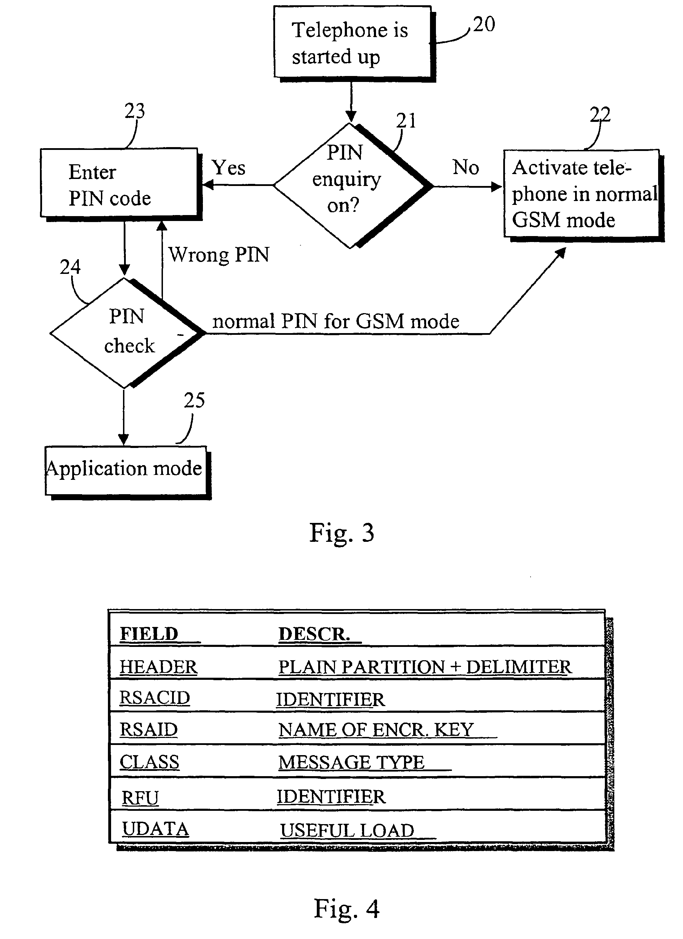

Fig. 3 presents the PIN code verification procedure applied at the start-up of the mobile station. In block 20, the mobile station is turned on. According to the standard, the data required for start-up are read from the subscriber identity module SIM. In block 21, if the PIN inquiry function has been turned off, then the mobile station is activated in the normal GSM mode. If the PIN inquiry function is on, then the PIN code is entered, block 23. In block 24, the PIN code supplied by the user is verified. If the PIN code does not correspond to a valid identifier giving access to one of the segments, then the procedure will return to the PIN entry stage, block 23. If the PIN code is the code required for the normal GSM mode, then the telephone is activated in normal GSM mode, block 22. If the code supplied refers to the application mode, then the procedure will go on to block 25.

Fig. 4 presents the structure of a short message according to the invention. The field names and commands shown in Fig. 4 are only given as examples. The plain language part and delimiter in the (HEADER) field are placed at the beginning of the message and they indicate to the user the message type or the actions to be performed on the message. For example, a 'save' command included in the plain part tells the user that the message has to be saved to the subscriber identity module. Such a situation may occur e.g. when the telecommunication terminal receives a short message as provided by the invention and the message is not transferred directly to the subscriber identity module but remains in the terminal. Similarly, a 'send' command tells the user that the message has to be sent to the short message service center.

A CRC code in the (RSACID) field is used to deal with collisions occurring in connection with the creation of key pairs. If a key being created already exists, then the code is increased by one from the highest CRC code among the keys subject to collisions. As there may occur several collisions, the key pair having the highest CRC code has to be retrieved first.

The bytes in the (RSAID) field are used to define the name of the key. The RSAID and RSACID identifiers unambiguously define the owners of the public keys. The RSAID identifier is a computational sum generated from a public key pair, a signing and encryption key and general data relating to the key. When the key pair of the other party is loaded to the subscriber identity module, the workability of the keys can be already verified during the loading phase.

The identifier in the (CLASS) field is used to define the type of the message. Each byte in the identifier corresponds to a specification determining how the message is to be treated. Such specifications include e.g. public encryption key, public signing key, key holder information, verification of keys installed, plain-language message, signed message, encrypted message, signed and encrypted message, form overlay or precompletion of a selected form.

The (RFU) field is reserved for possible later needs.

The (UDATA) field contains the useful load of the message. The useful load may consist of a free-format string or a string filled in according to the form overlay.

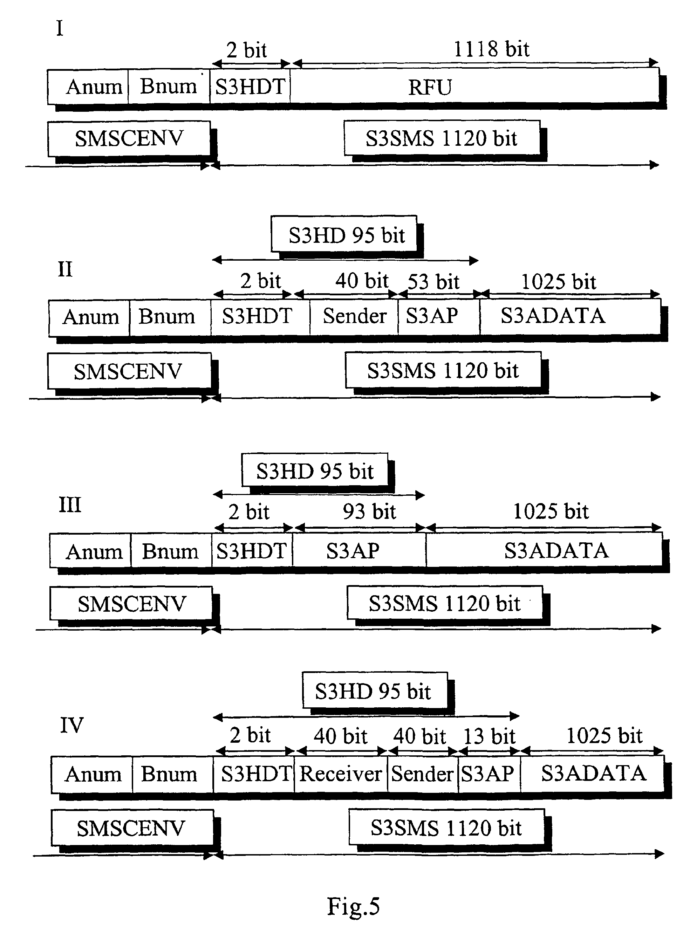

Fig. 5 presents four different examples of the short message structure. 'Short message' means e.g. an SMS message as used in the GSM system. The short message consists of two main sections: a header (S3HD) and an actual data section (S3ADATA). The length of the header (S3HD) is 95 bits and that of the data section (S3ADATA) is 1025 bits.

The header (S3HD) may have one of four possible structures. The structure is determined by the two leftmost bits (S3HDT) of the header (S3HD). In case I, S3HDT contains the bit pair 00. Anum and Bnum contain the identifiers of the receiving and sending parties, and together they form the section SMSCENV. RFU (Reserved for Future Use) and S3HEADER (S3HD) constitute the actual data section S3SMS of the message. RFU contains information at present undefined. This form of the message has been reserved for future use, so it will not be considered here.

In message type II, the header (S3HD) contains three fields: S3HDT, Sender and S3AP. The S2HDT field contains the bit pair 01. The Sender field contains information about the sender of the message. The receiver of the message (S3SMS) is identified by means of the Bnum and S3AP fields.

In message type III, the header section (S3HD) comprises two fields: S3HDT and S3AP. S3HDT consists of the bit pair 10 and the receiver of the message (S3SMS) is indicated by the Bnum and S3AP fields together. The sender of the message (S3SMS) is indicated in the Anum field.

In message type IV, the header section (S3HD) comprises four fields: S3HDT, Receiver, Sender and S3AP. S3HDT consists of the bit pair 11. This message type is used in GSM system mobile stations consistent with Phase 2. The structure of the message (S3SMS) is described in detail in specification ETSI 03.38. The entire space of the Receiver field (40 bits) can be utilized in mobile stations consistent with Phase 2+ because these allow SMS messages to be passed directly to the subscriber identity module (SIM).

In the following we shall consider ways in which the above-mentioned fields can be used to indicate both applications placed on the subscriber identity module and service provider applications.

A given application on the subscriber identity module is indicated by means of the Receiver, Sender and S3AP fields. For indication, bits 1..33 in the Receiver field are used as in a normal situation, whereas bits 34..40 unambiguously indicate the application for which the message is intended. The bits 1..40 of the Sender field point at the application group of the sender and the bits 1..13 of the S3AP field point at the sender's application. The Anum and Bnum fields are not used for indicating a given application in the subscriber identity module.

Service producer applications are indicated in a somewhat different way. A given application is indicated by means of the Bnum, Receiver and 3SAP fields. Bnum indicates the target to which the S3SMS message is to be transmitted. Bits 34..40 in the Receiver field indicate a given application of the service provider. The bits 1..13 in the S3AP field indicate the application to which the message is to be directed.

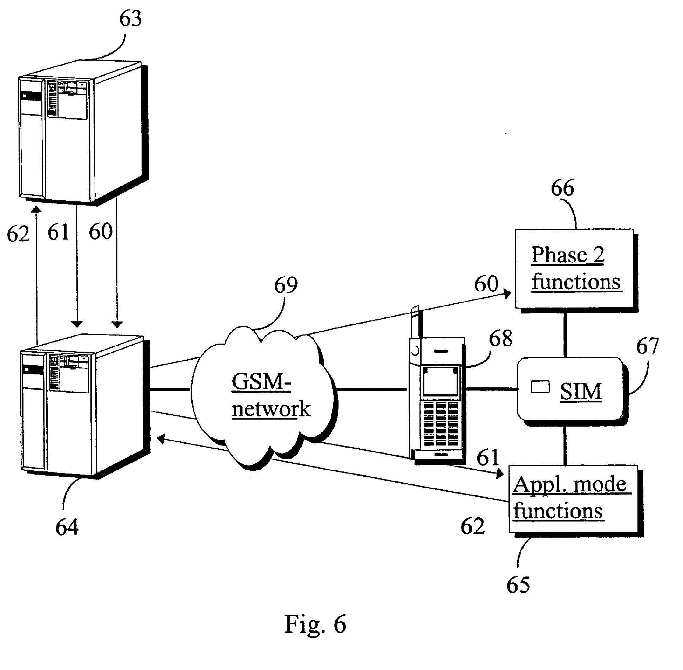

Fig. 6 presents a preferred embodiment of the invention as an example of the operation of the system. The system is implemented utilizing the GSM system 69. The example presented in Fig. 6 comprises a SIM card 67, which may work in two different "modes". One of these is a normal mobile communication mode, in which the normal Phase 2 functions are in use. The other mode is a so-called Subset mode, in which specific application mode functions 65 are available. In this mode, the SIM card 67 can be used to produce digital signatures. To use the Subset mode 65, it is not necessary to have a Phase 2+ mobile station 68, but this mode can also be used in Phase 2 mobile stations. The SIM card 67 is switched to the Subset mode 65 at start-up if the user gives the PIN code required for that mode. Similarly, the SIM card 67 is switched to the normal mobile communication mode if the PIN code entered was the code for the normal mobile communication mode. In this mode 66, all Phase 2 functions are available. To switch over from one of these two modes to the other, the mobile station has to be turned off and then turned on again.

The digital signature made in Subset mode 65 is implemented e.g. with the RSA algorithm using information stored in the distinct space. The information stored in that space includes the keys needed for encryption and/or signature. The service provider 63, which in this example is a bank, sends an SMS message containing the data 61 to be signed to the SIM card 67. The SMS message is e.g. as presented in Fig. 5. The message to be signed is sent to the IMSI (IMSI, International Mobile Subscriber Identity) for the Subset mode 65. In this example, the SIM card 67 implements the functions of two International Mobile Subscriber Identities. After the data 61 to be signed has been sent to the IMSI for the Subset mode 65, the service provider 63 sends an SMS message giving notice 60 about this to the IMSI for the Phase 2 mode 66. In this way, the user is notified about the data 61 to be signed if the mobile station 68 has been started in normal GSM mode and so he can restart the mobile station 68 in Subset mode 65.

In Subset mode 65, the SIM card 67 contains for each service a record or file which contains the rules regarding the treatment of the data 61 to be signed and sent as an SMS message. The rules of treatment are stored in space 3 presented in Fig. 2. Appended to the end of the record or file for each service is a hash of the rules of treatment for the service in question. This hash is included in the data 61 to be signed. In this way, the received data 61 to be signed is unambiguously bound to a given service. The user confirms the signature by giving e.g. the PIN2 code for the Subset mode 65. The signed data 62 is sent in the form of an SMS message back to the service provider 63 via an SMS center 64.

The invention is not restricted to the examples of its embodiments described above, but many variations are possible within the scope of the inventive idea defined in the claims.

## Claims

1. Method for the utilization of applications stored on a subscriber identity module (SIM) and for secure treatment of information associated with them in a telecommunication system comprising
a telecommunication network (1),
a mobile station (2) connected to the telecommunication network (1), and
a subscriber identity module (SIM) connected to the mobile station (2), said method comprising the steps of:
starting up the mobile station (2), and
giving a predetermined code by means of which a desired operating mode of the mobile station is selected, **characterized in that** the method further comprises the steps of:
saving the keys required for encryption and/or decryption and/or signature to the subscriber identity module (SIM), in a space (3) to which only a predetermined partition stored on the subscriber identity module SIM has a right of access in a given operating mode.

2. Method as defined in claim 1, **characterized in that** information associated with the applications used and/or other possible information is stored in said space (3).

3. Method as defined in claim 1 or 2,
**characterized in that** the predetermined partition is the operating system of the subscriber identity module (SIM) and/or an extension of the operating system.

4. Method as defined in any one of claims 1-3, **characterized in that** the use of the space (3) in the subscriber identity module and/or the contents of said space (3) are/is controlled via an OTA interface.

5. Method as defined in any one of claims 1 - 4, **characterized in that** the application used is controlled on the basis of the information contained in space (3) in the subscriber identity module (SIM).

6. Method as defined in any one of claims 1 - 5, **characterized in that** new applications and/or encryption keys associated with them are loaded into the subscriber identity module (SIM) by using an operating menu and/or on the basis of the information contained in space (3) via the OTA interface.

7. Method as defined in any one of claims 1 - 6, **characterized in that**, when new applications and/or encryption keys associated with them are to be loaded into the subscriber identity module (SIM), a predetermined confirmation and/or password is required for the loading operation.

8. Method as defined in any one of claims 1 - 7, **characterized in that** an encryption and/or signing key and/or some other unambiguous identifier is attached to each application and/or to the service produced by it.

9. Method as defined in any one of claims 1 - 8, **characterized in that** the encryption and/or signing of the desired message is only started when the function is confirmed with a predetermined password.

10. Method as defined in any one of claims 1 - 9, **characterized in that** the subscriber identity module (SIM) is divided into several separate segments.

11. Method as defined in any one of claims 1 - 10, **characterized in that** the selection of a segment of the subscriber identity module (SIM) is controlled by supplying a predetermined code into the subscriber identity module (SIM) in conjunction with the start-up of the mobile station (2).

12. Method as defined in any one of claims 1 - 11, **characterized in that**, based on the operating mode selected, a basic menu is loaded into SMS and/or ADN memory locations and/or into some other part of the subscriber identity module (SIM).

13. Method as defined in any one of claims 1 - 12, **characterized in that**, if the same predetermined code has been assigned to more than one segment in the subscriber identity module (SIM), then the segment coming first in sequential order is selected.

14. Method as defined in any one of claims 1 - 13, **characterized in that**, if the code inquiry function has been deactivated in conjunction with the start-up of the mobile station (2), then the normal mobile communication mode is used.

15. Method as defined in any one of claims 1 - 14, **characterized in that** the message is an SMS message.

16. Method as defined in any one of claims 1 - 15, **characterized in that** the message used consists of a header section and an actual data section.

17. Method as defined in any one of claims 1 - 16, **characterized in that** the header section of the message consists of a header type indicator and/or receiver information and/or sender information and/or application indicator and/or other information.

18. Method as defined in any one of claims 1 - 17, **characterized in that** the encryption method used is the RSA method.

19. System for the utilization of applications stored on a subscriber identity module (SIM) and for secure treatment of information associated with them in a telecommunication system comprising
a telecommunication network (1),
a mobile station (2) connected to the telecommunication network (1), and
a subscriber identity module (SIM) connected to the mobile station (2), said system comprising means for :
starting the mobile station (2), and
giving a predetermined code by means of which a desired operating mode of the mobile station is selected, **characterized in that** the system further comprises
means (4) for saving the keys required for encryption and/or signature to the subscriber identity module (SIM), in a space (3) to which only a predetermined partition stored on the subscriber identity module SIM has a right of access in a given operating mode.

20. System as defined in claim 19, **characterized in that** the system comprises means (5) for saving information associated with the applications used and/or other possible information to space (3) .

21. System as defined in claim 19 or 20, **characterized in that** the system comprises means (6) for controlling said space (3) and/or its contents via an OTA interface.

22. System as defined in any one of claims 19 - 21, **characterized in that** the system comprises means (7) for controlling the operation of the application in use on the basis of the information contained in said space (3) in the subscriber identity module (SIM).

23. System as defined in any one of claims 19 - 22, **characterized in that** the system comprises means (8) for loading a basic menu on the basis of the selected operating mode into SMS and/or ADN memory locations and/or into some other part of the subscriber identity module (SIM).

24. System as defined in any one of claims 19 - 23, **characterized in that** the system comprises means (9) for loading new applications and/or encryption keys associated with applications into the subscriber identity module (SIM) via an OTA interface.

25. System as defined in any one of claims 19 - 24, **characterized in that** the system comprises means (10) for starting the loading of new applications and/or associated encryption keys only when the operation is confirmed with a predetermined identifier.

26. System as defined in any one of claims 19 - 25, **characterized in that** the system comprises means (11) for attaching an encryption and/or signing key and/or other unambiguous identifier to each application and/or to the service produced by it.

27. System as defined in any one of claims 19 - 26, **characterized in that** the system comprises means (12) for starting the encryption and/or signing of the desired message only when the operation is confirmed with a predetermined identifier.

28. System as defined in any one of claims 19 - 27, **characterized in that** the system comprises means (13) for dividing the subscriber identity module (SIM) into several separate segments.

29. System as defined in any one of claims 19 - 28, **characterized in that** the system comprises means (14) for selecting a segment in the subscriber identity module (SIM) by means of a code supplied in conjunction with the start-up of the mobile station (2).

30. System as defined in any one of claims 19 - 29, **characterized in that** the telecommunication network (1) is a mobile communication network.

31. Subscriber identity module (SIM), comprising
a data processing device (15),
a storage device (16) connected to the data processing device (15), and
a data transfer device (17) connected to the data processing device (15) and provided with a connection interface (IF) for the transfer of information between the mobile station (2) and the subscriber identity module (SIM), on which subscriber identity module (SIM) applications and encryption algorithms associated with encryption methods are stored, **characterized in that** the subscriber identity module (SIM) comprises
means (4) for storing the keys needed for encryption and/or signature in a space (3) to which only a predetermined partition stored on the subscriber identity module SIM has a right of access in a given operating mode.

32. Subscriber identity module (SIM) as defined in claim 31, **characterized in that** the subscriber identity module (SIM) comprises means (5) for saving information associated with the applications used and/or other possible information to said space (3).

33. Subscriber identity module (SIM) as defined in claim 31 or 32, **characterized in that** the subscriber identity module (SIM) comprises means (6) for controlling said space (3) and/or its contents via an OTA interface.

34. Subscriber identity module (SIM) as defined in any one of claims 31 - 33, **characterized in that** the subscriber identity module (SIM) comprises means (7) for controlling the operation of an application in use on the basis of information contained in said space (3) in the subscriber identity module (SIM).

35. Subscriber identity module (SIM) as defined in any one of claims 31 - 34, characteri z e d in that the subscriber identity module (SIM) comprises means (8) for loading a basic menu into SMS and/or ADN memory locations and/or into some other part of the subscriber identity module (SIM) on the basis of the operating mode selected.

36. Subscriber identity module (SIM) as defined in any one of claims 31 - 35, **characterized in that** the subscriber identity module (SIM) comprises means (9) for loading new applications and/or encryption keys associated with applications into the subscriber identity module (SIM) via an OTA interface.

37. Subscriber identity module (SIM) as defined in any one of claims 31 - 36, **characterized in that** the subscriber identity module (SIM) comprises means (10) for starting the loading of new applications and/or associated encryption keys only when the operation is confirmed with a predetermined identifier.

38. Subscriber identity module (SIM) as defined in any one of claims 31 - 37, **characterized in that** the subscriber identity module (SIM) comprises means (11) for attaching an encryption and/or signing key and/or some other unambiguous identifier to each application and/or to the service produced by it.

39. Subscriber identity module (SIM) as defined in any one of claims 31 - 38, **characterized in that** the subscriber identity module (SIM) comprises means (12) for starting the encryption and/or signature of a desired message only when this operation is confirmed with a predetermined identifier.

40. Subscriber identity module (SIM) as defined in any one of claims 31 - 39, **characterized in that** the subscriber identity module (SIM) comprises means (13) for dividing the subscriber identity module (SIM) into several separate segments.

## Patentansprüche

1. Verfahren zur Verwendung von Anwendungen bzw. Anwenderprogrammen, welche in einem Teilnehmer-Identitätsmodul (SIM) gespeichert sind, und zur sicheren Behandlung von Information, welche damit verbunden ist, in einem Telekommunikationssystem, welches aufweist:
ein Telekommunikationsnetzwerk (1),
ein Mobiltelefon (2), welches mit dem Telekommunikationsnetzwerk (1) verbunden ist, und
ein Teilnehmer-Identitätsmodul (SIM), welches an dem Mobiltelefon (2) angeschlossen ist, wobei das Verfahren die Schritte aufweist von:
Einschalten des Mobiltelefons (2), und
Geben eines vorher festgelegten Codes, mit dessen Hilfe ein gewünschter Betriebsmodus des Mobiltelefons ausgewählt wird, **dadurch gekennzeichnet, dass** das Verfahren ferner die folgenden Schritte aufweist:
Speichern der Schlüssel, welche für das Verschlüsseln und/oder Entschlüsseln und/oder eine Unterschrift auf dem Teilnehmer-Identitätsmodul (SIM) in einem Raum bzw. Bereich (3), auf welchem nur eine vorher festgelegte Partition, welche auf dem Teilnehmer-Identitätsmodul (SIM) gespeichert ist, ein Recht auf Zugriff in einem gegebenen Betriebsmodus hat.

2. Verfahren nach Anspruch 1, **dadurch gekennzeichnet, dass** Information, welche mit den benutzten Anwendungen verbunden ist, und/oder andere mögliche Information in dem Bereich (3) gespeichert wird.

3. Verfahren nach Anspruch 1 oder 2, **dadurch gekennzeichnet**, das die vorher festgelegte Partition das Betriebssystem des Teilnehmer-Identitätsmoduls (SIM) und/oder eine Erweiterung des Betriebssystems ist.

4. Verfahren nach einem der Ansprüche 1 bis 3, **dadurch gekennzeichnet, dass** das Benutzen des Bereiches (3) in dem Teilnehmer-Identitätsmodul und/oder der Inhalt des Bereiches (3) über ein OTA-Interface gesteuert werden/wird.

5. Verfahren nach einem der Ansprüche 1 bis 4, **dadurch gekennzeichnet, dass** die benutzte Anwendung auf der Grundlage der Information, welche in dem Bereich (3) in dem Teilnehmer-Identitätsmodul (SIM) enthalten ist, gesteuert wird.

6. Verfahren nach einem der Ansprüche 1 bis 5, **dadurch gekennzeichnet, dass** neue Anwenderprogramme und/oder mit diesen verbundene Verschlüsselungsschlüssel in das Teilnehmer-Identitätsmodul (SIM) geladen werden, indem ein Betriebsmenü benutzt wird und/oder auf der Grundlage der Information, welche in dem Bereich (3) enthalten ist, über das OAT-Interface.

7. Verfahren nach einem der Ansprüche 1 bis 6, **dadurch gekennzeichnet, dass**, wenn neue Anwendungen und/oder Verschlüsselungsschlüssel, welche mit diesen verbunden sind, in das Teilnehmer-Identitätsmodul (SIM) zu laden sind, eine vorher festgelegte Bestätigung und/oder ein Passwort für die Ladeoperation erforderlich ist.

8. Verfahren nach einem der Ansprüche 1 bis 7, **dadurch gekennzeichnet, dass** ein Verschlüsselungs- und/oder Unterzeichnungsschlüssel und/oder eine andere eindeutige Kennzeichnung jeder Anwendung und/oder dem Dienst beigefügt werden/wird, welcher durch diese hergestellt wird.

9. Verfahren nach einem der Ansprüche 1 bis 8, **dadurch gekennzeichnet, dass** die Verschlüsselung und/oder Unterzeichnung der gewünschten Nachricht nur gestartet wird, wenn die Funktion mit einem vorher festgelegten Passwort bestätigt wird.

10. Verfahren nach einem der Ansprüche 1 bis 9, **dadurch gekennzeichnet, dass** das Teilnehmer-Identitätsmodul (SIM) in mehrere getrennte Segmente geteilt wird.

11. Verfahren nach einem der Ansprüche 1 bis 10, **dadurch gekennzeichnet, dass** die Auswahl eines Segmentes des Teilnehmer-Identitätsmoduls (SIM) durch das Liefern eines vorher festgelegten Codes in dem Teilnehmer-Identitätsmodul (SIM) in Verbindung mit dem Einschalten des Mobiltelefons (2) gesteuert wird.

12. Verfahren nach einem der Ansprüche 1 bis 11, **dadurch gekennzeichnet, dass**, basierend auf dem ausgewählten Betriebsmodus, ein Grundmenü in die SMS- und/oder ADN-Speicherplätze und/oder in irgendeinen anderen Teil des Teilnehmer-Identitätsmoduls (SIM) geladen wird.

13. Verfahren nach einem der Ansprüche 1 bis 12, **dadurch gekennzeichnet, dass**, falls der gleiche, vorher festgelegte Code mehr als einem Segment in dem Teilnehmer-Identitätsmodul (SIM) zugeteilt wurde, dann das Segment ausgewählt wird, welches als Erstes in der laufenden Folge kommt.

14. Verfahren nach einem der Ansprüche 1 bis 13, **dadurch gekennzeichnet, dass** im Falle, dass die Anfragefunktion des Codes in Zusammenhang mit dem Einschalten des Mobiltelefons (2) deaktiviert wurde, dann der normale Mobilkommunikationsmodus benutzt wird.

15. Verfahren nach einem der Ansprüche 1 bis 14, **dadurch gekennzeichnet, dass** die Nachricht eine SMS-Nachricht ist.

16. Verfahren nach einem der Ansprüche 1 bis 15, **dadurch gekennzeichnet, dass** die benutzte Nachricht aus einem Nachrichtenkopfabschnitt und einem aktuellen Datenabschnitt besteht.

17. Verfahren nach einem der Ansprüche 1 bis 16, **dadurch gekennzeichnet, dass** der Nachrichtenkopfabschnitt der Nachricht aus einem Anzeigeelement vom Nachrichtenkopftyp und/oder einer Empfängerinformation und/oder einer Senderinformation und/oder eines Anwendungsanzeigeelementes und/oder einer anderen Information besteht.

18. Verfahren nach einem der Ansprüche 1 bis 17, **dadurch gekennzeichnet, dass** das benutzte Verschlüsselungsverfahren das RSA-Verfahren ist.

19. System zur Verwendung von Anwendungen, welche auf einem Teilnehmer-Identitätsmodul (SIM) gespeichert sind, und zur sicheren Behandlung von Information, welche damit verbunden ist, in einem Telekommunikationssystem, welches aufweist:
ein Telekommunikationsnetzwerk (1),
ein Mobiltelefon (2), welches mit dem Telekommunikationsnetzwerk (1) verbunden ist, und
ein Teilnehmer-Identitätsmodul (SIM), welches mit dem Mobiltelefon (2) verbunden ist, wobei das System Einrichtungen aufweist zum:
Starten des Mobiltelefons (2), und
Geben eines vorher festgelegten Codes, mit dessen Hilfe ein gewünschter Betriebsmodus des Mobiltelefons ausgewählt wird, **dadurch gekennzeichnet, dass** das System ferner aufweist:
eine Einrichtung (4) zum Speichern der Schlüssel, welche für die Verschlüsselung, und/oder einer Unterschrift erforderlich sind, in dem Teilnehmer-Identitätsmodul (SIM), in einem Bereich (3), in welchem nur eine vorher festgelegte Partition, welche auf dem Teilnehmer-Identitätsmodul (SIM) gespeichert ist, ein Recht auf Zugriff in einem gegebenen Betriebsmodus hat.

20. System nach Anspruch 19, **dadurch gekennzeichnet, dass** das System eine Einrichtung (5) zum Speichern von Information aufweist, welche mit den benutzten Anwendungen verbunden ist, und/oder anderer möglicher Information in dem Bereich (3).

21. System nach Anspruch 19 oder 20, **dadurch gekennzeichnet, dass** das System eine Einrichtung (6) zum Steuern des Bereiches (3) und/oder seines Inhalts über ein OTA-Interface aufweist.

22. System nach einem der Ansprüche 19 bis 21, **dadurch gekennzeichnet, dass** das System eine Einrichtung (7) zum Steuern des Betriebs der Anwendung aufweist, welche auf der Grundlage der Information in Gebrauch ist, welche in dem Bereich (3) in dem Teilnehmer-Identitätsmodul (SIM) enthalten ist.

23. System nach einem der Ansprüche 19 bis 22, **dadurch gekennzeichnet, dass** das System eine Einrichtung (8) zum Laden eines Grundmenüs auf der Grundlage des ausgewählten Betriebsmodus in das SMS und/oder ADN-Speicherorte und/oder in irgendeinen anderen Teil des Teilnehmer-Identitätsmoduls (SIM) aufweist.

24. System nach einem der Ansprüche 19 bis 23, **dadurch gekennzeichnet, dass** das System eine Einrichtung (9) zum Laden neuer Anwendungen und/oder Verschlüsselungsschlüssel, welche mit den Anwendungen verbunden sind, in das Teilnehmer-Identitätsmodul (SIM) über ein OTA-Interface aufweist.

25. System nach einem der Ansprüche 19 bis 24, **dadurch gekennzeichnet, dass** das System eine Einrichtung (10) zum Starten des Ladens von neuen Anwendungen und/oder damit verbundenen Verschlüsselungsschlüsseln aufweist, nur wenn die Operation mit einem vorher festgelegten Identifizierelement bestätigt wird.

26. System nach einem der Ansprüche 19 bis 25, **dadurch gekennzeichnet, dass** das System eine Einrichtung (11) zum Hinzufügen eines Verschlüsselungs- und/oder eines anderen eindeutigen Identifizierelements an jede Anwendung und/oder an den Dienst, welcher durch sie hergestellt wird, aufweist.

27. System nach einem der Ansprüche 19 bis 26, **dadurch gekennzeichnet, dass** das System eine Einrichtung (12) zum Starten der Verschlüsselung und/oder des Unterzeichnens der gewünschten Nachricht, nur wenn die Operation mit einem vorher festgelegten Identifizierelement bestätigt wird, aufweist.

28. System nach einem der Ansprüche 19 bis 27, **dadurch gekennzeichnet, dass** das System eine Einrichtung (13) zum Teilen des Teilnehmer-Identitätsmoduls (SIM) in mehrere getrennte Segmente aufweist.

29. System nach einem der Ansprüche 19 bis 28, **dadurch gekennzeichnet, dass** das System eine Einrichtung (14) zum Auswählen eines Segments in dem Teilnehmer-Identitätsmodul (SIM) mit Hilfe eines Codes aufweist, welcher in Verbindung mit dem Einschalten des Mobiltelefons (2) geliefert wird.

30. System nach einem der Ansprüche 19 bis 27, **dadurch gekennzeichnet, dass** das Telekommunikationsnetzwerk (1) ein Mobilkommunikationsnetzwerk ist.

31. Teilnehmer-Identitätsmodul (SIM), welches aufweist:
eine Datenverarbeitungseinrichtung (15),
eine Speichereinrichtung (16), welche mit der Datenverarbeitungseinrichtung (15) verbunden ist, und
eine Datenübertragungseinrichtung (17), welche mit der Datenverarbeitungseinrichtung (15) verbunden ist und welche mit einem Verbindungs-Interface (IS) für das Übertragen von Information zwischen dem Mobiltelefon (2) und dem Teilnehmer-Identitätsmodul (SIM) ausgestattet ist, auf welchem Teilnehmer-Identitätsmodul-(SIM-)Anwendungen und Verschlüsselungsalgorithmen, welche mit den Verschlüsselungsverfahren verbunden sind, gespeichert sind, **dadurch gekennzeichnet, dass** das Teilnehmer-Identitätsmodul (SIM) aufweist:
eine Einrichtung (4) zum Speichern der Schlüssel, welche für das Verschlüsseln und/oder die Unterschrift in einem Bereich (3) benötigt werden, in dem nur eine vorher festgelegte Partition, welche auf dem Teilnehmer-Identitätsmodul (SIM) gespeichert ist, das Recht auf Zugriff in einem gegebenen Betriebsmodus hat.

32. Teilnehmer-Identitätsmodul (SIM) nach Anspruch 31, **dadurch gekennzeichnet, dass** das Teilnehmer-Identitätsmodul (SIM) eine Einrichtung (5) zum Speichern von Information, welche mit den benutzten Anwendungen verbunden ist, und/oder von anderer möglicher Information auf dem Bereich (3) aufweist.

33. Teilnehmer-Identitätsmodul (SIM) nach Anspruch 31 oder 32, **dadurch gekennzeichnet, dass** das Teilnehmer-Identitätsmodul (SIM) eine Vorrichtung (6) zum Steuern des Bereiches (3) und/oder dessen Inhalts über ein OTA-Interface aufweist.

34. Teilnehmer-Identitätsmodul (SIM) nach einem der Ansprüche 31 bis 33, **dadurch gekennzeichnet, dass** das Teilnehmer-Identitätsmodul (SIM) eine Vorrichtung (7) zum Steuern der Operation einer Anwendung, welche auf der Basis der Information, welche in dem Bereich (3) in dem Teilnehmer-Identitätsmodul (SIM) in Gebrauch ist, aufweist.

35. Teilnehmer-Identitätsmodul (SIM) nach einem der Ansprüche 31 bis 34, **dadurch gekennzeichnet, dass** das Teilnehmer-Identitätsmodul (SIM) eine Einrichtung (8) zum Laden eines Grundmenüs in SMS- und/oder ADN-Speicherorte und/oder in irgendeinen anderen Teil des Teilnehmer-Identitätsmoduls (SIM) auf der Grundlage des ausgewählten Betriebsmodus aufweist.

36. Teilnehmer-Identitätsmodul (SIM) nach einem der Ansprüche 31-35, **dadurch gekennzeichnet, dass** das Teilnehmer-Identitätsmodul (SIM) eine Einrichtung (9) zum Laden neuer Anwendungen und/oder Verschlüsselungsschlüssel, welche mit Anwendungen verbunden sind, in das Teilnehmer-Identitätsmodul (SIM) über ein OTA-Interface aufweist.

37. Teilnehmer-Identitätsmodul (SIM) nach einem der Ansprüche 31 bis 36, **dadurch gekennzeichnet, dass** das Teilnehmer-Identitätsmodul (SIM) eine Vorrichtung (10) zum Starten des Ladens von neuen Anwendungen und/oder damit verbundenen Verschlüsselungsschlüsseln, nur wenn die Operation mit einem vorher festgelegten Identifizierelement bestätigt wird, aufweist.

38. Teilnehmer-Identitätsmodul (SIM) nach einem der Ansprüche 31 bis 37, **dadurch gekennzeichnet, dass** das Teilnehmer-Identitätsmodul (SIM) eine Einrichtung (11) zum Hinzufügen eines Verschlüsselungs- und/oder Unterschriftsschlüssels und/oder irgendeines anderen eindeutigen Identifizierelements an jede Anwendung und/oder an den Dienst, der durch diese hergestellt ist, aufweist.

39. Teilnehmer-Identitätsmodul (SIM) nach einem der Ansprüche 31 bis 38, **dadurch gekennzeichnet, dass** das Teilnehmer-Identitätsmodul (SIM) eine Einrichtung (12) zum Starten der Verschlüsselung und/oder der Unterschrift einer gewünschten Nachricht, nur wenn diese Operation mit einem vorher festgelegten Identifizierelement bestätigt wird, aufweist.

40. Teilnehmer-Identitätsmodul (SIM) nach einem der Ansprüche 31 bis 39, **dadurch gekennzeichnet, dass** das Teilnehmer-Identitätsmodul (SIM) eine Einrichtung (13) zum Teilen des Teilnehmer-Identitätsmoduls (SIM) in mehrere getrennte Segmente aufweist.

## Revendications

1. Procédé d'utilisation d'applications stockées sur un module d'identification de l'abonné (SIM) et de traitement sécurisé d'informations associées à ces applications dans un système de télécommunication comprenant
un réseau de télécommunication (1),
une station mobile (2) connectée au réseau de télécommunication (1), et
un module d'identification de l'abonné (SIM) connecté à la station mobile (2), ledit procédé comprenant les étapes consistant à :
démarrer la station mobile (2), et
donner un code prédéterminé au moyen duquel un mode de fonctionnement souhaité de la station mobile est sélectionné, **caractérisé en ce que** le procédé comprend en outre l'étape consistant à :
sauvegarder les clés requises pour le cryptage et/ou le décryptage et/ou la signature du module d'identification de l'abonné (SIM), dans un espace (3) auquel seule une partition prédéterminée stockée sur le module d'identification de l'abonné (SIM) a un droit d'accès dans un mode de fonctionnement donné.

2. Procédé selon la revendication 1, **caractérisé en ce que** les informations associées aux applications utilisées et/ou d'autres informations possibles sont stockées dans ledit espace (3).

3. Procédé selon la revendication 1 ou 2, **caractérisé en ce que** la partition prédéterminée est le système d'exploitation du module d'identification de l'abonné (SIM) et/ou une extension du système d'exploitation.

4. Procédé selon l'une quelconque des revendications 1 à 3, **caractérisé en ce que** l'utilisation de l'espace (3) dans le module d'identification de l'abonné et/ou le contenu dudit espace (3) est/sont commandé(s) via une interface OTA.

5. Procédé selon l'une quelconque des revendications 1 à 4, **caractérisé en ce que** l'application utilisée est commandée sur la base des informations contenues dans l'espace (3) dans le module d'identification de l'abonné (SIM).

6. Procédé selon l'une quelconque des revendications 1 à 5, **caractérisé en ce que** de nouvelles applications et/ou clés de cryptage associées à ces applications sont chargées dans le module d'identification de l'abonné (SIM) en utilisant un menu d'exploitation edou sur la base des informations contenues dans l'espace (3) via l'interface OTA.

7. Procédé selon l'une quelconque des revendications 1 à 6, **caractérisé en ce que**, lorsque de nouvelles applications et/ou clés de cryptage associées à ces applications doivent être chargées dans le module d'identification de l'abonné (SIM), une confirmation et/ou un mot de passe prédéterminé est requis pour l'opération de chargement.

8. Procédé selon l'une quelconque des revendications 1 à 7, **caractérisé en ce qu'**une clé de cryptage et/ou de signature et/ou quelque autre identificateur inambigu est attaché à chaque application et/ou service produit par celle-ci.

9. Procédé selon l'une quelconque des revendications 1 à 8, **caractérisé en ce que** le cryptage et/ou la signature du message souhaité n'est démarré que lorsque la fonction est confirmée par un mot de passe prédéterminé.

10. Procédé selon l'une quelconque des revendications 1 à 9, **caractérisé en ce que** le module d'identification de l'abonné (SIM) est divisé en plusieurs segments séparés.

11. Procédé selon l'une quelconque des revendications 1 à 10, **caractérisé en ce que** la sélection d'un segment du module d'identification de l'abonné (SIM) est commandée en fournissant un code prédéterminé dans le module d'identification de l'abonné (SIM) conjointement avec le démarrage de la station mobile (2).

12. Procédé selon l'une quelconque des revendications 1 à 11, **caractérisé en ce que**, sur la base du mode de fonctionnement sélectionné, un menu basique est chargé dans des emplacements mémoires SMS et/ou ADN et/ou dans quelque autre partie du module d'identification de l'abonné (SIM).

13. Procédé selon l'une quelconque des revendications 1 à 12, **caractérisé en ce que**, si le même code prédéterminé a été attribué à plus d'un segment dans le module d'identification de l'abonné (SIM), alors le segment venant en premier dans l'ordre séquentiel est sélectionné.

14. Procédé selon l'une quelconque des revendications 1 à 13, **caractérisé en ce que**, si la fonction de consultation de code a été désactivée conjointement avec le démarrage de la station mobile (2), alors le mode de communication normale est utilisé.

15. Procédé selon l'une quelconque des revendications 1 à 14, **caractérisé en ce que** le message est un message SMS.

16. Procédé selon l'une quelconque des revendications 1 à 15, **caractérisé en ce que** le message utilisé consiste en une section d'en-tête et une section de données effectives.

17. Procédé selon l'une quelconque des revendications 1 à 16, **caractérisé en ce que** la section d'en-tête du message consiste en des informations d'indicateur et/ou de récepteur de type en-tête et/ou des informations d'expéditeur et/ou des informations d'indicateur d'applications et/ou d'autres informations.

18. Procédé selon l'une quelconque des revendications 1 à 17, **caractérisé en ce que** le procédé de cryptage utilisé est le procédé RSA.

19. Système d'utilisation d'applications stockées sur un module d'identification de l'abonné (SIM) et de traitement sécurisé d'informations associées à ces applications dans un système de télécommunication comprenant
un réseau de télécommunication (1),
une station mobile (2) connectée au réseau de télécommunication (1), et un module d'identification de l'abonné (SIM) connecté à la station mobile (2), ledit système comprenant les moyens destinés à :
démarrer la station mobile (2), et
donner un code prédéterminé au moyen duquel un mode de fonctionnement souhaité de la station mobile est sélectionné, **caractérisé en ce que** le système comprend en outre
un moyen (4) destiné à sauvegarder les clés requises pour le cryptage et/ou la signature du module d'identification de l'abonné (SIM), dans un espace (3) auquel seule une partition prédéterminée stockée sur le module d'identification de l'abonné SIM a un droit d'accès dans un mode de fonctionnement donné.

20. Système selon la revendication 19, **caractérisé en ce que** le système comprend un moyen (5) destiné à sauvegarder des informations associées aux applications utilisées et/ou d'autres informations possibles dans l'espace (3).

21. Système selon la revendication 19 ou 20, **caractérisé en ce que** le système comprend un moyen (6) destiné à commander ledit espace (3) et/ou son contenu via une interface OTA.

22. Système selon l'une quelconque des revendications 19 à 21, **caractérisé en ce que** le système comprend un moyen (7) destiné à commander le fonctionnement de l'application en utilisation sur la base des informations contenues dans ledit espace (3) dans le module d'identification de l'abonné (SIM).

23. Système selon l'une quelconque des revendications 19 à 22, **caractérisé en ce que** le système comprend un moyen (8) destiné à charger un menu basique sur la base du mode de fonctionnement sélectionné dans les emplacements mémoires SMS et/ou ADN et/ou dans quelque autre partie du module d'identification de l'abonné (SIM).

24. Système selon l'une quelconque des revendications 19 à 23, **caractérisé en ce que** le système comprend un moyen (9) destiné à charger de nouvelles applications et/ou clés de cryptage associées à des applications dans le module d'identification de l'abonné (SIM) via une interface OTA.

25. Système selon l'une quelconque des revendications 19 à 24, **caractérisé en ce que** le système comprend un moyen (10) destiné à démarrer le chargement de nouvelles applications et/ou de clés de cryptage associées uniquement lorsque le fonctionnement est confirmé avec un identificateur prédéterminé.

26. Système selon l'une quelconque des revendications 19 à 25, **caractérisé en ce que** le système comprend un moyen (11) destiné à attacher une clé de cryptage et/ou de signature et/ou un autre identificateur inambigu à chaque application et/ou au service produit par celle-ci.

27. Système selon l'une quelconque des revendications 19 à 26, **caractérisé en ce que** le système comprend un moyen (12) destiné à démarrer le cryptage et/ou la signature du message souhaité uniquement lorsque le fonctionnement est confirmé avec un identificateur prédéterminé.

28. Système selon l'une quelconque des revendications 19 à 27, **caractérisé en ce que** le système comprend un moyen (13) destiné à diviser le module d'identification de l'abonné (SIM) en plusieurs segments séparés.

29. Système selon l'une quelconque des revendications 19 à 28, **caractérisé en ce que** le système comprend un moyen (14) destiné à sélectionner un segment dans le module d'identification de l'abonné (SIM) au moyen d'un code fourni conjointement avec le démarrage de la station mobile (2).

30. Système selon l'une quelconque des revendications 19 à 29, **caractérisé en ce que** le réseau de télécommunication (1) est un réseau de communication mobile.

31. Module d'identification de l'abonné (SIM), comprenant
un dispositif de traitement de données (15),
un dispositif de stockage (16) connecté au dispositif de traitement de données (15), et
un dispositif de transfert de données (17) connecté au dispositif de traitement de données (15) et doté d'une interface de connexion (IF) pour le transfert d'informations entre la station mobile (2) et le module d'identification de l'abonné (SIM), sur lequel le module d'identification de l'abonné (SIM) des applications et des algorithmes de cryptage associés aux procédés de cryptage sont stockés, **caractérisé en ce que** le module d'identification de l'abonné (SIM) comprend
un moyen (4) destiné à stocker les clés nécessaires pour le cryptage et/ou la signature dans un espace (3) auquel seule une partition prédéterminée stockée sur le module d'identification de l'abonné SIM a un droit d'accès dans un mode de fonctionnement donné.

32. Module d'identification de l'abonné (SIM) selon la revendication 31, **caractérisé en ce que** le module d'identification de l'abonné (SIM) comprend un moyen (5) destiné à sauvegarder des informations associées aux applications utilisées et/ou d'autres informations possibles dans ledit espace (3).

33. Module d'identification de l'abonné (SIM) selon la revendication 31 ou 32, **caractérisé en ce que** le module d'identification de l'abonné (SIM) comprend un moyen (6) destiné à commander ledit espace (3) et/ou son contenu via une interface OTA.

34. Module d'identification de l'abonné (SIM) selon l'une quelconque des revendications 31 à 33, **caractérisé en ce que** le module d'identification de l'abonné (SIM) comprend un moyen (7) destiné à commander le fonctionnement d'une application en utilisation sur la base des informations contenues dans ledit espace (3) dans le module d'identification de l'abonné (SIM).

35. Module d'identification de l'abonné (SIM) selon l'une quelconque des revendications 31 à 34, **caractérisé en ce que** le module d'identification de l'abonné (SIM) comprend un moyen (8) destiné à charger un menu basique dans des emplacements mémoires SMS et/ou ADN et/ou dans quelque autre partie du module d'identification de l'abonné (SIM) sur la base du mode de fonctionnement sélectionné.

36. Module d'identification de l'abonné (SIM) selon l'une quelconque des revendications 31 à 35, **caractérisé en ce que** le module d'identification de l'abonné (SIM) comprend un moyen (9) destiné à charger de nouvelles applications et/ou clés de cryptage associées à des applications dans le module d'identification de l'abonné (SIM) via une interface OTA.

37. Module d'identification de l'abonné (SIM) selon l'une quelconque des revendications 31 à 36, **caractérisé en ce que** le module d'identification de l'abonné (SIM) comprend un moyen (10) destiné à démarrer le chargement de nouvelles applications et/ou clés de cryptage associées uniquement lorsque le fonctionnement est confirmé avec un identificateur prédéterminé.

38. Module d'identification de l'abonné (SIM) selon l'une quelconque des revendications 31 à 37, **caractérisé en ce que** le module d'identification de l'abonné (SIM) comprend un moyen (11) destiné à attacher une clé de cryptage et/ou de signature et/ou quelque autre identificateur inambigu à chaque application et/ou au service produit par celle-ci.

39. Module d'identification de l'abonné (SIM) selon l'une quelconque des revendications 31 à 38, **caractérisé en ce que** le module d'identification de l'abonné (SIM) comprend un moyen (12) destiné à démarrer le cryptage et/ou la signature d'un message souhaité uniquement lorsque ce fonctionnement est confirmé avec un identificateur prédéterminé.

40. Module d'identification de l'abonné (SIM) selon l'une quelconque des revendications 31 à 39, **caractérisé en ce que** le module d'identification de l'abonné (SIM) comprend un moyen (13) destiné à diviser le module d'identification de l'abonné (SIM) en plusieurs segments séparés.
